Europäisches Patentamt

European Patent Office

Office européen des brevets

(11) Veröffentlichungsnummer: **0 423 522 A1**

# EUROPÄISCHE PATENTANMELDUNG

(21) Anmeldenummer: 90118652.8

(22) Anmeldetag: 28.09.90

(51) Int. Cl.⁵: **C09D 5/00**, C08J 7/02,
B05D 5/06

(30) Priorität: 07.10.89 DE 3933599

(43) Veröffentlichungstag der Anmeldung:
**24.04.91 Patentblatt 91/17**

(84) Benannte Vertragsstaaten:
**AT BE CH DE DK ES FR GB GR IT LI LU NL SE**

(71) Anmelder: **Akzo N.V.**
**Postbus 9300 Velperweg 76**
**NL-6800 SB Arnhem(NL)**

(72) Erfinder: **Tatas, Ralf, Dr.**
**Bleiwäsche 11**
**W-5603 Wülfrath(DE)**
Erfinder: **Specht, Horst**
**Schererstrasse 6**
**W-8760 Miltenberg(DE)**

(74) Vertreter: **Fett, Günter**
**Akzo Patente GmbH Kasinostrasse 19 - 23**
**W-5600 Wuppertal 1(DE)**

(54) **Wässrige Farbeffekt-Beschichtungen.**

(57) Es werden Beschichtungsmittel-Zubereitungen für die Herstellung von Farbeffekt-Beschichtungen zur Verfügung gestellt, bestehend aus einer pigmentierten oder nicht pigmentierten wäßrigen Dispersion von polymeren Bindemitteln (a) und mit einem oder mehreren Farbstoffen beladenen porösen polymeren Trägern (b), wobei die Farbstoffe in dem wäßrigen Dispersions-Medium nicht oder nur geringfügig löslich sind. Aus diesen Zubereitungen werden Farbeffekt-Beschichtungen hergestellt durch Beschichten eines Substrats mit dem Beschichtungsmittel mit üblichen Auftragstechniken, Behandeln der Oberfläche der getrockneten bzw. gehärteten Beschichtung mit einem für den jeweiligen Farbstoff geeigneten Lösungsmittel oder einer ein solches Lösungsmittel enthaltenden Deckbeschichtungszubereitung und Trocknen bzw. Härten der so mit dem Farbeffekt versehenen Beschichtung. Hierbei werden attraktive Farbmuster erhalten.

EP 0 423 522 A1

## WÄSSRIGE FARBEFFEKT-BESCHICHTUNGEN

Die vorliegende Erfindung betrifft Farbstoffe enthaltende Beschichtungsmittel, ihre Verwendung zur Herstellung von Farbeffekt-Beschichtungen. Unter Farbeffekt sind hier die interessanten Farbmuster zu verstehen, welche beispielsweise durch Auftrag nicht miteinander mischbarer Farbstoff-Zubereitungen entstehen und auch als Marmorierungs-Effekt bekannt sind. Beispielsweise erzielt man diesen Effekt durch kurzes Homogenisieren verschiedenfarbiger, nicht miteinander mischbarer Beschichtungszubereitungen und unmittelbar anschließendes Auftragen der Beschichtung beispielsweise durch Spritzen auf ein Substrat, worauf sich die Zubereitungen wieder entmischen und so zu einem mehr oder weniger geordneten Nebeneinander von farbigen Tüpfeln und Schlieren führen. Eine solche Verfahrensweise ist aufwendig. Sie erfordert die Verwendung einer Homogenisier-Vorrichtung und die sofortige Weiterverarbeitung der homogenisierten Beschichtungsmittel-Zubereitung; eine Lagerung ist nicht möglich. Die Herstellung solcher Beschichtungen kann praktisch nur von Fachkräften mit entsprechender Ausrüstung ausgeführt werden, kaum aber von Heimwerkern ("Do-it-yourself-Sektor"), die sich auf konventionelle bzw. einfache Applikationstechniken beschränken müssen und möglichst ein zugleich lagerstabiles und verarbeitungsbereites Produkt erwarten.

Es war daher Aufgabe der vorliegenden Erfindung, solche attraktiven Farbeffekt-Beschichtungen zur Verfügung zu stellen, welche die genannten Erwartungen erfüllen. Sie wird gelöst durch eine farbstoffhaltige Beschichtungsmittel-Zubereitung für die Herstellung von Beschichtungen mit attraktivem Farbeffekt durch Behandeln der Oberfläche der getrockneten bzw. gehärteten Beschichtung mit einem für den jeweiligen Farbstoff geeigneten Lösungsmittel, bestehend aus einer pigmentierten oder nichtpigmentierten wäßrigen Dispersion von (a) polymeren Bindemitteln und (b) Trägern aus feinteiligem festem Polymer-Material mit offenporiger Struktur, welches mit einem oder mehreren Farbstoffen beladen wurde, wobei die Farbstoffe in dem wäßrigen Dispersionsmedium nicht oder nur geringfügig löslich sind.

Die Farbeffekt-Beschichtungen werden erfindungsgemäß aus den Beschichtungsmittel-Zubereitungen gemäß einem oder mehreren der Ansprüche 1 bis 9 erhalten durch Beschichten eines geeigneten Substrats unter Anwendung üblicher Auftragstechniken und Behandeln der Oberfläche der getrockneten bzw. gehärteten Beschichtung mit einem für den jeweiligen Farbstoff geeigneten Lösungsmittel oder einer ein solches Lösungsmittel enthaltenden Deckbeschichtungs-Lösung und Trocknen bzw. Härten der so mit dem Farbeffekt versehenen Beschichtung.

Unter "Beschichtungsmittel" sollen hier alle denkbaren polymere Bindemittel enthaltenden pigmentierten oder nichtpigmentierten wäßrigen Zubereitungen in flüssiger bis pastöser Form verstanden werden, welche geeignete Beschichtungen eines festen Substrats zu bilden gestatten und welche insbesondere durch Spritzen, Streichen, Rollen, Spachteln, Gießen, Tauchen und Extrudieren aufgetragen werden können. Bevorzugte Beschichtungsmittel sind Lacke und Anstrichmittel.

Unter "Bindemittel" sollen erfindungsgemäß die nichtflüchtigen Anteile von Beschichtungsmittel-Zusammensetzungen, allerdings ohne Pigmente und Füllstoffe, verstanden werden, welche unter anderem die wesentliche Aufgabe haben, Pigmente zu binden. Zu den Bindemitteln zählt man so die die Beschichtung bildende Polymermasse und die schwerflüchtigen Beschichtungsmittel-Hilfsmittel, wie Stabilisatoren, Weichmacher und Trockenstoffe.

Als polymere Bindemittel (a) kommen praktisch alle Polymeren in Frage, welche stabile wäßrige Dispersionen zu bilden vermögen, zumeist unter Anwendung von Stabilisatoren, wie Schutzkolloide und Emulgatoren. Dies sind vor allem Polymere auf Basis von radikalisch polymerisierten ethylenisch ungesättigten Monomeren, insbesondere solche, die durch Emulsionspolymerisation erhalten werden und als Bindemittel die jeweiligen Anforderungen an ein Beschichtungsmittel erfüllen. Emulsionspolymerisationen werden beispielsweise beschrieben in "Dispersionen synthetischer Hochpolymerer", von F. Hölscher, Teil I, Springer Verlag 1969 und in HoubenWeyl, "Methoden der organischen Chemie", Band E20 (1987).

Die erfindungsgemäßen Bindemittel (a) sind beispielsweise Homo- bzw. Copolymere aus Monomeren aus der Gruppe der $\alpha$-Olefine, der konjugierten und isolierten Diene und Polyene sowie der chlorsubstituierten Diene und Polyene, aus der Gruppe der Polyvinylverbindungen, wie Vinylester, Vinylether, Vinylpyridine, N-Vinylamide, Verbindungen mit chlorierter Vinylgruppe, Styrol und übliche substituierte Styrole, aus der Gruppe der Acrylate und Methacrylate, wie die Ester und Amide von Acrylsäure und Methacrylsäure, die freien Säuren selbst, Acrylnitril und Methacrylnitril, aus der Gruppe der $\alpha,\beta$-ungesättigten Polycarbonsäuren, wie Malein-, Fumar- und Itaconsäure sowie ihre Ester und Maleinsäureanhydrid.

Vor allem kommen Homo- und Copolymerisate aus handelsüblichen Monomeren in Betracht wie Ethylen, Propylen, Butylen, 2-Methylpenten, 1,3-Butadien, Isopren, Chlorpren, Vinylchlorid, Vinylidenchlorid, Vinylacetat, Vinylpropionat, Versatinsäurevinylester, Styrol, 4-Chlorstyrol, 2,5-Dichlorstyrol, $\delta$-Chlorstyrol, $\delta$-

Methylstyrol, 2,5-Diäthylstyrol und t-Butylstyrol, Acrylnitril, Methacrylnitril, Acrylsäure und Methacrylsäure und deren Ester mit einer Methyl-, Ethyl-, Propyl-, Butyl-, Hexyl-, Ethylhexyl-, Octyl-, Hydroxyethyl-, Hydroxypropyl-, Aminoethyl-, Glycidyl-, Allyl- und Dicyclopentenyl-Gruppe in der alkoholischen Komponente, Acrylamid und Methacrylamid, Dimethyl-, 2-(N,N-Dimethyl-aminoethyl)-, Methylol-, Methoxymethyl- und Diaceton-acrylamid bzw. methacrylamid, Maleinsäureanhydrid, Mono- und Di-ester von Maleinsäure, Fumarsäure und Itaconsäure mit Methyl-, Ethyl-, Propyl-, Butyl- und Hexyl-Gruppe in der alkoholischen Komponente.

Unter "pigmentierten" wäßrigen Dispersionen sollen erfindungsgemäß solche verstanden werden, welche Farb- und/-oder Weißpigment zusätzlich zu den in den Trägern befindlichen Farbstoffen enthalten. Dabei sind selbstverständlich die Farbpigmente und deren Anteil so zu wählen, daß der erfindungsgemäße Farbeffekt nicht überdeckt wird, sondern im gewünschten Maß in Erscheinung treten kann. Bevorzugt werden erfindungsgemäß weißpigmentierte wäßrige Dispersionen von polymeren Bindemitteln (a) eingesetzt, insbesondere solche, wie sie zahlreich im Handel angeboten werden, beispielsweise die Typen Mowilith[R] von Hoechst, Litex[R] von Hüls oder Alphalux[R] von Akzo.

Als Material für den mit Farbstoffen zu beladenden porösen polymeren Träger kommen erfindungsgemäß praktisch alle synthetischen Polymeren in Frage, welche feinteilige Pulver und eine offenporige Struktur mit einer relativ großen inneren Oberfläche sowie stabile wäßrige disperse Phasen in wäßrigen Polymerdispersionen zu bilden vermögen und so eine ausreichende Menge Farbstoff aufzunehmen gestatten, gleichzeitig sich aber sowohl in dem wäßrigen Medium als auch dem Farbstoff bzw. Farbstoff-Lösungsmittel nicht lösen und gegenüber diesen auch chemisch inert sind. Insbesondere sollten solche Träger einerseits den Farbstoff hinreichend fixieren und an einem Austritt in das wäßrige Medium weitgehend hindern (latente Depot-Wirkung), andererseits aber relativ rasch und hinreichend Farbstoff dann abgeben, wenn nach Auftrag und Trocknung bzw. Härtung des Beschichtungsmittels der Farbeffekt durch Behandeln der BeschichtungsOberfläche mit einem geeigneten Lösungsmittel erzeugt werden soll. Die Träger dürfen auch nicht der Dispersionsstabilität der erfindungsgemäßen wäßrigen Dispersionen abträglich sein.

Erfindungsgemäß wird ein Trägermaterial mit mittleren Porendurchmessern <100 µm und insbesondere <10 µm (mikroporöses Material) bevorzugt.

Die den erfindungsgemäßen Träger bildenden Polymeren können Polyadditionspolymere, z.B. Polyurethane oder Polymerisate aus ethylenisch ungesättigten radikalisch polymerisierbaren Monomeren, Kondensationspolymere, z.B. Polyester, Polyamide, Polycarbonate und Polysulfone und Oxidationspolymere, z.B. Polyphenylenoxid, sein.

Unter den Polymerisaten aus ethylenisch ungesättigten Monomeren kommen insbesondere Homo- und Copolymere aus Olefinen, z.B. Ethylen, Propylen, Butylen, 2-Methylpenten und Butadien, Vinylverbindungen, z.B. Vinylchlorid, Vinylidenchlorid, Styrol, Vinylester, z.B. Vinylacetat und Vinylpropionat, Vinylether, z.B. Vinylbutyral, sowie Acrylat- und Methacrylat-Verbindungen wie (Meth)acrylnitril, (Meth)acrylsäureester, z.B. mit Methyl-, Ethyl-, Propyl-, Butyl-, Hexyl-, Ethylhexyl-, Octyl-, Hydroxyethyl- und Hydroxypropyl-Alkohol als alkoholische Komponente und Diester von α,β-ethylenisch ungesättigte Dicarbonsäuren, z.B. Fumar-, Malein- und Itaconsäure sowie ihre Mono- und Diester mit den bei den (Meth)acrylsäureestern genannten alkoholischen Komponenten, in Betracht, ferner chloriertes Polyethylen und hydrolysierte Polyvinylacetate. Unter den Copolymeren kommen insbesondere Acrylnitril-Butadien-Styrol-Polymere, Styrol-Butadien-Polymere, Ethylen-Vinylacetat-Polymere, Ethylen(Meth)acrylsäure-Polymere und Methyl(meth)-acrylat-Butylacrylat-Polymere in Betracht.

Unter den Polyestern und Polyamiden kommen insbesondere Polyethylenterephthalat, Polybutylenterephthalat, Polycaprolactam, Polyaminoundecansäure, Polyaminotridecansäure, Polyhexamethylenadipamid in Betracht.

Ganz besonders kommen erfindungsgemäß als Träger Produkte in Betracht, deren Herstellung die DE-PS 27 37 745 beschreibt, auf deren Inhalt sich hier ausdrücklich bezogen wird. Weitere Verfahren zur Herstellung geeigneter Träger werden in den deutschen Offenlegungsschriften 32 05 289, 30 26 688 und 30 26 762 beschrieben. Die zwei letzteren geben als Hinweis auf das Anwendungsgebiet der Verfahrensprodukte unter vielem anderen auch "Zusatz zu den verschiedensten Anstrichmitteln" an, jedoch keinen Hinweis auf erfindungsgemäße Beschichtungsmittel-Zubereitungen.

Bevorzugt kommen Träger zum Einsatz, die nach Verfahren hergestellt sind, bei denen man ein Gemisch aus einem thermoplastischen Polymeren und einer verträglichen Flüssigkeit zur Bildung einer homogenen Lösung auf eine ausreichende Temperatur und eine genügende Zeit lang erhitzt, der besagten Lösung eine gewünschte Form anzunehmen gestattet, die besagte Lösung in der besagten gewünschten Form mit einer Geschwindigkeit auf eine ausreichende Temperatur so abkühlt, daß unter den thermodynamischen Nicht-Gleichgewichtsbedingungen eine flüssig-flüssig Phasentrennung initiiert wird, das Kühlen darauf bis zur Bildung eines festen Körpers fortsetzt und daß man wenigstens einen wesentlichen Teil der Flüssigkeit aus dem resultierenden Feststoff zur Bildung der porösen Polymerstruktur, die zumeist porös ist, entfernt.

Nach obengenanntem Stand der Technik hergestellte poröse Produkte der Firma Akzo sind unter der eingetragenen Bezeichnung "Accurel" geläufig.

Die mittleren Durchmesser der Trägerteilchen in erfindungsgemäßen Beschichtungsmittel-Zubereitungen können in weiten Grenzen variieren, z.B. je nach angestrebter Oberflächenstruktur. Die Obergrenze wird bestimmt durch die Dispersionsstabilität der Trägerteilchen in der wäßrigen Dispersion, die Untergrenze durch die jeweils erwartete Aufnahmekapazität der Träger-Teilchen. Bevorzugt wird ein Bereich von 50 - 800 μm und besonders bevorzugt von 50 bis 400 μm Teilchendurchmesser. Dies sind auch die Abmessungen des gemäß DE-PS 27 37 745 erhältlichen Materials.

Das von außen zugängliche Hohlraumvolumen des Trägermaterials in erfindungsgemäßen Beschichtungs-Zubereitungen liegt besonders vorteilhaft in einem Bereich zwischen 70 und 85 % des Gesamtvolumens des Trägermaterials.

Als Farbstoffe kommen erfindungsgemäß praktisch alle Produkte in Frage, welche von dem Trägermaterial aufgenommen werden, sowohl in diesem als auch in dem wäßrigen Medium unlöslich und gegenüber diesen auch chemisch inert sind, letzteres auch unter den Bedingungen des Trocknens bzw. Härtens der Beschichtungen. Eine chemische Reaktion des Farbstoffs kann in Kauf genommen werden, wenn die Farbqualität unverändert bleibt und kann dann sogar erwünscht sein, wenn damit eine Fixierung des Farbstoffs an das Beschichtungsmaterial verbunden ist. Der Farbstoff sollte ferner auch keinen destabilisierenden Einfluß auf die erfindungsgemäße wäßrige Dispersion ausüben. Insbesondere sollte er im Dispersionsmedium nicht oder nur geringfügig löslich sein, um ein "Ausbluten" des Farbstoffs zu vermeiden. Es sollte dann vor allem möglichst nur ein rein wäßriges Dispersionsmedium eingesetzt, also die Anwesenheit von wassermischbaren Lösungsmitteln für den Farbstoff ausgeschlossen werden, wenn die Beschichtung vor der Erzeugung des Farbeffekts keinerlei Farbton oder lediglich Weißpigment enthalten soll.

Es kann aber durchaus ein geringfügiges "Ausbluten" erwünscht sein, so daß die Beschichtungsmittel-Zubereitung und die getrocknete Beschichtung schon vor Erzeugung des Farbeffekts in den Farben bzw. Farbmischungen der Träger-Farbstoffe mehr oder weniger getönt ist, und nach Erzeugung des Farbeffekts entsprechend gescheckte Muster resultieren. Im gewünschten Fall kann eine solche Tönung durch die Träger-Farbstoffe auch durch Arbeiten mit grobporigem Trägermaterial oder Zusätzen von Farbstofflösungsmitteln, die insbesondere wassermischbar sind, erhalten werden.

Schließlich soll der Farbstoff zur Farbeffekt-Erzeugung in einem organischen Lösungsmittel löslich sein, das Dispersions- und Trägerteilchen nicht oder nur geringfügig angreift.

Die Farbstoffe können beispielsweise Produkte aus der Gruppe der Azo-, der Azin-, der Anthrachinon-, der Phthalocyanin-, der Polymethin-, der Xanthen- und der Triarylmethan-Farbstoffe sein.

Erfindungsgemäß kann der Träger sowohl mit feinpulvrigem als auch mit flüssigem Farbstoff, aber auch mit Farbstoff-Lösungen beladen werden. Die Entscheidung für eine dieser Möglichkeiten wird bestimmt durch gewünschte Farbtiefe, Modifikation des Farbstoffs und Kostenüberlegungen. Mit einem festen Farbstoff, durch den vor allem die äußere Trägeroberfläche belegt wird, ergibt sich zweifelsfrei eine günstigere Farbausbeute. Immerhin können mit festen Farbstoffen noch 50 % des Hohlraumvolumens der Trägerteilchen gefüllt werden. Mit flüssigen Farbstoffen werden bis zu 80 % und mit Farbstoff-Lösungen bis zu 100 % des Hohlraumvolumens der Trägerteilchen gefüllt.

Nach Einsatz von Farbstoff-Lösungen zum Beladen des Trägers muß das Lösungsmittel vor dem Mischen des beladenen Trägers (b) mit der wäßrigen Dispersion wieder ganz oder weitgehend abgezogen werden. Das Lösungsmittel sollte daher relativ leichtflüchtig sein. Mittels im Träger verbliebener Anteile Lösungsmittel kann im gewünschten Fall ebenfalls eine Farbtönung der Beschichtung vor der Farbeffekt-Erzeugung bewirkt werden. Das Farbstoff-Lösungsmittel sollte ebenso wie der Farbstoff den Träger nicht anlösen oder chemisch verändern.

In erfindungsgemäßen Beschichtungsmittel-Zubereitungen können zugleich zwei oder mehrere Farbstoffe eingesetzt werden, wobei diese auch getrennt auf verschiedenen Träger-Teilchen vorliegen können. Bei der Erzeugung des Farbeffekts wird dann so verfahren, daß die getrocknete bzw. gehärtete Beschichtungsoberfläche selektiv und sequentiell hintereinander mit 2 oder mehreren Lösungsmitteln behandelt wird, in denen jeweils nur ein Farbstoff oder eine Farbstoffgruppe, auf jeden Fall aber nicht alle der eingesetzten Farbstoffe zugleich löslich sind. Das Ergebnis eines solchen selektiven Farbstoff-Einsatzes sind dann interessante, attraktive Muster zweier oder mehrerer Farben nebeneinander. Bei Behandlung einer Mehrfarben-Beschichtung mit einem nichtselektiven Lösungsmittel bilden sich - wie zu erwarten - nur Mischfarben aus, während Zwischenformen beider Effekte das Resultat sind, wenn eine Mehrfarben-Beschichtung mit einem Lösungsmittel von lediglich erheblichem unterschiedlichem Lösevermögen für

4

zwei oder mehrere Farbstoffe behandelt wird.

Der Träger kann erfindungsgemäß mit dem Farbstoff bzw. der Farbstoff-Lösung auf einfache Weise durch Mischen der Komponenten beladen werden. Bei Einsatz von Farbstoff-Lösungen wird das Lösungsmittel wieder entfernt, z.B. durch Abziehen im Vakuum.

Das jeweils erforderliche Mengenverhältnis von Farbstoff bzw. Farbstoff-Lösung und Träger kann in weiten Grenzen variieren und hängt von den jeweils gewählten Arbeitsbedingungen, der gewünschten Farbtiefe und ökonomischen Überlegungen ab und kann vom Fachmann unschwer ermittelt werden. Selbstverständlich müssen die Farbstoffmengen der zur Verfügung stehenden Aufnahmekjapazität des Trägers angepaßt sein, um vorzeitige Verfärbungen des Beschichtungsmaterials zu vermeiden, wenn nicht gewünscht. Es ist im übrigen überraschend, daß erfindungsgemäße Beschichtungs-Zubereitungen selbst im Falle eines sehr hohen, jedoch unterhalb der Träger-Aufnahmekapazität liegenden Farbstoffanteils zumeist praktisch nur die Eigenfarbe der Basisdispersionen mit dem polymeren Bindemittel (a) und gegebenenfalls Pigmenten aufweisen. Und es ist weiterhin erstaunlich, wie die Träger-Farbstoffe in dem erfindungsgemäßen Beschichtungsmittel auch nach dem Auftrag auf das Substrat und nach dem Trocknen weiterhin nicht sichtbar in Erscheinung treten, dann aber durch die Lösungsmittel-Behandlung schlagartig die effektvollen Farben sichtbar werden.

Ebenso einfach wie die Beladung des Trägers können die erfindungsgemäßen Beschichtungsmittel-Zubereitungen aus pigmentierter Basisdispersion und farbstoffbeladenem Träger durch Mischen erhalten werden. Es kann aber ebenso einfach, insbesondere wenn man von zunächst unpigmentierten Polymerdispersionen ausgeht, der beladene Träger bei der Herstellung der Pigmentpaste derselben vor dem Vermahlen zugesetzt werden; Basisdispersion und Pigmentpaste werden dann durch einfaches Mischen vereinigt. Hierdurch wird die Teilchengröße des Trägermaterials weiter verringert und werden damit kräftigere Farbtöne (Pastellfarben) erzielt. Ein hierbei eintretendes geringfügiges "Ausbluten" kann - je nach Anwendungsziel - sogar erwünscht sein.

Das jeweils geeignete Mengenverhältnis von beladenem Träger, wäßrigem Medium, Dispersionsteilchen und Pigment kann ebenso in weiten Grenzen variieren und hängt ebenso von den gewählten Arbeitsbedingungen, dem gewünschten Effekt und öknomischen Überlegungen sowie von der angestrebten Oberflächenstruktur ab und ist vom Fachmann leicht zu ermitteln.

Bevorzugt werden wäßrige Dispersionen der polymeren Bindemittel (a) mit einem Feststoff-Anteil von 40 bis 60 Gew.% eingesetzt. Nach dem Mischen von wäßriger Polymerdispersion und beladenem Träger kann leicht die Viskosität der Beschichtungsmittel-Zubereitung dadurch stark ansteigen, daß schon relativ geringe Mengen Wasser des Dispersionsmediums vom Träger absorbiert werden. Es empfiehlt sich daher, den mit dem Farbstoff beladenen Träger vor dem Mischen durch Lagerung in Wasser zu äquilibrieren.

Die erfindungsgemäßen Beschichtungsmittel können auf das jeweilige Substrat durch einfache, übliche Beschichtungstechniken wie Spritzen, Streichen, Rollen, Spachteln, Gießen, Tauchen und Extrudieren aufgetragen werden. Nach dem Auftrag läßt man die Beschichtung trocknen. Das kann bei Umgebungstemperatur oder höheren Temperaturen geschehen. Trockendauer und Temperatur hängen vom gewünschten Effekt und der Verfahrensweise bei der anschließenden Oberflächenbehandlung mit dem Lösungsmittel ab. Die Oberfläche kann schon nach einigen Minuten Trockenzeit, z.B. wenn der Beschichtungsfilm gerade berührungstrocken ist, aber auch erst nach mehreren Tagen Trockenzeit bei Umgebungstemperatur behandelt werden. Für die Oberflächenbehandlung empfehlen sich nicht zu niedrigsiedende Lösungsmittel; sehr gut geeignet sind solche mit einem Siedebereich um 150°C. Ebenso gut kann die Oberfläche zur Erzeugung des Farbeffekts auch mittels einer diese Lösungsmittel enthaltenden Beschichtungs-Lösung oder -Dispersion behandelt werden. Das ist vor allem dann von Vorteil, wenn für die Beschichtung ohnehin eine abschließende Deckschicht, beispielsweise ein Klarlack vorgesehen ist. Welche Lösungsmittel man verwendet, kann den Lösungsmittel-Tabellen für die bekannten Farbstoffe entnommen werden. Für Mehrfarben-Effekte müssen Lösungsmittel bzw. Farbstoffe so gewählt werden, daß beim Behandeln selektiv jeweils nur einer der Farbstoffe oder eine Farbstoffgruppe gelöst werden, wobei die letzte Behandlung auch mit einer Deckbeschichtungs-Zubereitung, welche dieses Lösungsmittel als Lösungs- oder Dispersionsmedium enthält, beispielsweise einem Klarlack, durchgeführt werden kann. Beispielsweise könnte man für einen Zweifarben-Effekt mit einem öllöslichen, aber ketonunlöslichen und einem ketonlöslichen, aber ölunlöslichen Farbstoff hintereinander mit einem Öl und einem Keton als Lösungsmittel die Oberfläche behandeln.

Die Behandlung kann je nach Beschaffenheit des Substrats und gewünschtem Effekt auf die verschiedenste Weise ausgeführt werden. Beispiele sind Sprühen, Gießen, Tauchen, Pinseln und Reiben.

Die Herstellung erfindungsgemäßer Beschichtungsmittel-Zubereitungen und ihre Verarbeitung zu den attraktiven gefleckten bis gesprenkelten, geschlungenen und gestreiften Farbmustern sind also verblüffend einfach: Man kann eine übliche käufliche wäßrige Polymerdispersion wählen und setzt den mit Farbstoff beladenen Träger zu, wobei gegebenenfalls auf Verarbeitungsviskosität verdünnt werden muß und sofortige Weiterverarbeitung nicht zwingend erforderlich ist. Da ferner nur einfache, konventionelle Beschichtungstechniken erforderlich sind, kann die erfindungsgemäße Effekt-Beschichtung auch vom Nichtfachmann ausgeführt werden. Dem Heimwerker kommt noch entgegen, daß die erfindungsgemäßen Beschichtungsmittelzubereitungen über solch ausgezeichnete Dispersions-Stabilität (Lagerstabilität) verfügen, daß sie fertig gemischt und betriebsbereit als Einkomponenten-Beschichtungsmittel im Handel angeboten werden können.

Wegen der sehr attraktiven Farbmusterbildung eignen sich die erfindungsgemäßen Beschichtungsmittel-Zubereitungen hervorragend als Lacke und Anstriche, beispielsweise zur Verzierung von Gebrauchsgegebständen verschiedenerlei Materials und Fassaden.

Die vorliegende Erfindung wird durch die nachfolgenden experimentellen Angaben näher erläutert:

Es werden 4 g Trägermaterial vom Accurel-Typ mit mittlerem Porendurchmesser im Bereich von 0.1 bis 1 μm und einem Porenvolumen im Bereich von 75 bis 80 %, z.B. Accurel- Propylen-Pulver[1], Accurel-LDPE-Pulver[2],, Accurel-Polyamid 6-Pulver[3], Accurel-Polyamid 12-Pulver[4] und AccurelMacrolon-Pulver (aromatisches Polycarbonat) [5] mit 1 g flüssigem oder festem Farbstoff unter Rühren vermischt und anschließend mit 30 g Wasser äquilibriert.

Diese Dispersion von farbstoffbeladenem Träger in Wasser wird unter Rühren mit 100 g einer weißpigmentierten wäßrigen Polymerdispersion gemischt, z.B. Alphalux[R] (Produkt der Fa. Akzo auf Basis von Reinacrylaten; Bindemittel ca. 40 Gew.%[6], Titandioxid 30 Gew.%), Mowilith[R] (Produkt der Fa. Hoechst auf Basis von Reinacrylaten; Bindemittel ca. 50 Gew.%, Titandioxid ca. 40 Gew.%).

Stehen zunächst nur unpigmentierte wäßrige Polymerdispersionen zur Verfügung, so stellt man zunächst für diese Dispersionen übliche Pigmentpasten her, die dann mit der Polymerdispersion in üblicher Weise vermischt werden, gefolgt vom Zusatz des beladenen Trägers. Handelsübliche unpigmentierte wäßrige Polymerdispersionen sind z.B. solche vom Typ Acronal[R] (Produkt der Fa. BASF auf Basis von Acrylaten) und VeoVa[R] (Produkt der Fa. Shell auf Basis von Carbonsäurevinylestern) mit einem Bindemittelanteil von ca. 50 Gew.%. Es kann ferner aber auch der mit dem Farbstoff beladene Träger schon der Pigmentpaste, und zwar vor dem Vermahlen derselben, zugesetzt werden, insbesondere, wenn kleinere Teilchengrößen des Trägermaterials bzw. kräftige Farbtöne gewünscht werden.

1) Teilchengröße <200 μm, 200 - 400 μm oder 400 - 1000 μm
2) Teilchengröße <200 μm, <400 μm oder <800 μm
3) Teilchengröße <200 μm oder <800 μm
4) Teilchengröße <200 μm
5) Teilchengröße <100 μm
6) bezogen jeweils auf Gesamtgewicht

Die Beschichtungszübereitung ist dann verarbeitungsfertig und praktisch unbegrenzt lagerfähig.

Im Falle des Beladens der Träger mit Farbstoff-Lösungen kann man beispielsweise 2 g Farbstoff in 30 g Xylol lösen und die Lösung mit 5 g eines der Träger vom Accurel-Typ mischen. Anschließend wird das Lösungsmittel am Rotationsvakuumverdampfer abgezogen. Dann wird mit 30 g Wasser 1 Stunde am Rotationsvakuumverdampfer bei 25°C gerührt und anschließend werden 100 g einer der handelsüblichen weißpigmentierten wäßrigen Polymerdispersionen zugesetzt.

Die so zubereiteten Beschichtungsmittel werden auf übliche Weise, beispielsweise durch Spritzen oder Streichen aufgetragen und bei Raumtemperatur beliebige Zeit gelagert, zumindest aber bis zum berührungstrockenen Zustand. Die Beschichtung wird dann auf beliebige Weise zur Erzeugung des Farbeffekts mit dem entsprechenden Lösungsmittel behandelt, beispielsweise durch Spritzen.

In Tabelle 1 sind beispielhaft einige handelsübliche Farbstoffe und die jeweilige Beurteilung ihres Farbeffekts in organischen Lösungsmitteln (Gruppen) angegeben.

Tabelle 2 gibt die Farbeffekte von Farbstoff-Gemischen unterschiedlicher Löslichkeit in bestimmten Gemischen dieser Lösungsmittelgruppen an.

Tabelle 1

| Farbeffekt verschiedener handelsüblicher | | | | |
|---|---|---|---|---|
| Farbstoffe in organischen Lösungsmitteln | | | | |
| - kein Effekt + Färbung + + gute Färbung + + + sehr gute Färbung | | | | |
| | **Lösungsmittelgruppe** | | | |
| **Farbstoff** | Alkohole | Glykol-Verbind. | aliphat. KW | aromat. KW |
| | 1) | 2) | 3) | 4) |
| Nitroechtblau 2B (Anthrachinon-Farbstoff;Fa. Sandoz) | - | + + | + | + + + |
| Nitroechtviolett FBL (Anthrachinon-Farbstoff;Fa. Sandoz) | - | + + | + | + + |
| Neazaponrot 355 (Azo-Farbstoff;BASF) | + | + + + | - | + |
| Neazoponschwarz (Azo-Farbstoff;BASF) | + | + + + | - | + |
| Savinylgelb 3 GN (Azo-Farbstoff;FA.Sandoz) | - | + | - | - |
| Savinylblau RS (Azin-Farbstoff;Fa.Sandoz) | + | + + + | - | + + |
| Sudanrot 380 (Azo-Farbstoff;BASF) | - | + + | - | + |
| Sudangrün (Azo-Farbstoff;BASF) | + | + + + | + + | + + |
| Ceresgelb (Azo-Farbstoff; FA.Bayer) | - | + | + | + |
| Ceresorange (Azo-Farbstoff; Fa.Bayer) | + | + + | + | + |
| Ceresrot (Azo-Farbstoff; Fa.Bayer) | + | + + + | + | + + |
| Basonylrot 545 (Xanthen-Farbstoff;BASF) | + | + | - | - |

1) Methanol, Ethanol, i-Propanol, i-Butanol
2) Ethylglykolacetat, Essigsäurebutoxyethylester, Butoxyglykolacetat, Dowanol PPh, Ethoxypropanol, Monoethylenglykoldimethylether
3) Testbenzin, n-Hexan, n-Octan, Ligroin
4) p-Xylol, Toluol

Tabelle 2

| Farbeffekte von Farbstoff-Gemischen (1:1) unterschiedlicher Löslichkeit | | | | |
|---|---|---|---|---|
| | **Lösungsmittelgruppe** | | | |
| Farbstoffgemisch | Alkohole | Glykol-Verbind. | aliphat. KW | aromat. KW |
| Nitroechtblau 2B Neozaponrot 355 | rot | rot-blau | blau | rotblau |
| Savinylgelb 3GN Savinylblau RS | blau | grün | gelb | grün |
| Neozaponschwarz X51 Niitroechtviolett FBL | schwarz | violett-schwarz | violett | violett |
| Sudanrot 380 Nitroechtviolett FBL | rot | rot-violett | violett | rot-violett |
| Savinylgelb 2GLS Nitroechtviolett FBL | gelb | gelb-violett | violett | violett-gelb |
| Basonylrot 545 Sudangrün 987 | rot-grün | grün-schwach rot | grün | grün |

**Ansprüche**

1. Farbstoffhaltige Beschichtungsmittel-Zubereitung für die Herstellung von Beschichtungen mit attraktivem Farbeffekt durch Behandeln der Oberfläche der getrockneten bzw. gehärteten Beschichtung mit einem für den jeweiligen Farbstoff geeigneten Lösungsmittel, bestehend aus einer pigmentierten oder nichtpigmentierten wäßrigen Dispersion von (a) polymeren Bindemitteln und (b) Trägern aus feinteiligem festem Polymer-Material mit offenporiger Struktur, welches mit einem oder mehreren Farbstoffen beladen wurde, wobei die Farbstoffe in dem wäßrigen Dispersionsmedium nicht oder nur geringfügig löslich sind.

2. Beschichtungsmittel-Zubereitung gemäß Anspruch 1, dadurch gekennzeichnet, daß die polymeren Bindemittel (a) Homo- und Copolymere aus radikalisch polymerisierten ethylenisch ungesättigten Monomeren sind, und bevorzugt solche, die durch Emulsionspolymerisation erhalten werden und lagerstabile wäßrige Dispersionen bilden.

3. Beschichtungsmittel-Zubereitung gemäß Anspruch 1 oder 2, dadurch gekennzeichnet, daß die porösen polymeren Träger aus einem Material bestehen, welches feinteilige Pulver und offenporige Strukturen sowie stabile wäßrige disperse Phasen in wäßrigen Polymerdispersionen zu bilden vermag.

4. Beschichtungsmittel-Zubereitung gemäß einem oder mehreren der Ansprüche 1 bis 3, dadurch gekennzeichnet, daß die porösen polymeren Träger aus einem Material aus der Gruppe der Polyurethane, Homo- und Copolymeren aus ethylenisch ungesättigten Monomeren, Polyester, Polyamide, Polycarbonate, Polysulfone und Polyphenylenoxide gebildet sind.

5. Beschichtungsmittel-Zubereitung gemäß einem oder mehreren der Ansprüche 1 bis 4, dadurch gekennzeichnet, daß die porösen Träger aufgebaut sind aus Polyethylenen einer niederen Dichte, Polyethylenen einer hohen Dichte, Polypropylen, Polystyrol, Polyvinylchlorid, Acrylnitril-Butadien-Styrol-Terpolymeren, Styrol-Acrylnitril-Copolymeren, Styrol-Butadien-Copolymeren, Poly(4-methyl-penten-1), Polybutylen, Polyvinylidenchlorid, Polyvinylbutyral, chloriertem Polyethylen, Ethylen-Vinylacetat-Copolymeren, Polyvinylacetat, Polyvinylalkohol, Polymethylmethacrylat, Polymethylacrylat, Ethylen-Acrylsäure-Copolymeren und Ethylen-Acrylsäure-Metallsalz-Copolymeren, Polyethylenterephthalat, Polybutylenterephthalat, Polycaprolactam, Polyaminoundecansäure, Polyaminotridecansäure, Polyhexamethylenadipamid, Polycarbonaten, Polysulfonen und Polyphenylenoxid.

6. Beschichtungsmittel-Zubereitung gemäß einem oder mehreren der Ansprüche 1 bis 5, dadurch gekennzeichnet, daß die mikroporösen polymeren Träger hergestellt sind durch Verfahren, bei denen man ein Gemisch aus einem thermoplastischen Polymeren und einer verträglichen Flüssigkeit zur Bildung einer homogenen Lösung auf eine ausreichende Temperatur und eine genügende Zeit lang erhitzt, der besagten Lösung eine gewünschte Form anzunehmen gestattet, die besagte Lösung in der besagten gewünschten Form mit einer Geschwindigkeit auf eine ausreichende Temperatur so abkühlt, daß unter den thermodynamischen Nicht-Gleichgewichtsbedingungen eine flüssig-flüssig Phasentrennung initiiert wird, das Kühlen darauf bis zur Bildung eines festen Körpers fortsetzt und daß man wenigstens einen wesentlichen Teil der Flüssigkeit aus dem resultierenden Feststoff zur Bildung der mikroporösen Polymerstruktur entfernt.

7. Beschichtungsmittel-Zubereitung gemäß einem oder mehreren der Ansprüche 1 bis 6, dadurch gekennzeichnet, daß sie zwei oder mehrere Farbstoffe auf einem Träger oder getrennt auf verschiedenen Träger-Teilchen enthält, wobei mindestens zwei Farbstoffe in bestimmten organischen Lösungsmitteln selektiv löslich sind.

8. Beschichtungsmittel-Zubereitung gemäß einem oder mehreren der Ansprüche 1 bis 7 als lagerstabiles Einkomponenten-Beschichtungsmittel.

9. Beschichtungsmittel-Zubereitung gemäß einem oder mehreren der Ansprüche 1 bis 8 für die Herstellung von Farbeffekt-Lackschichten und Farbeffekt-Anstrichen.

10. Verfahren zur Herstellung von Farbeffekt-Beschichtungen durch Beschichten eines Substrats mit Beschichtungsmittel-Zubereitungen gemäß einem oder mehreren der Ansprüche 1 bis 9, Behandeln der Oberfläche der getrockneten bzw. gehärteten Beschichtung mit einem für den jeweiligen Farbstoff geeigneten Lösungsmittel oder einer ein solches Lösungsmittel enthaltenden Deckbeschichtungs-Lösung und Trocknung bzw. Härtung der so mit dem Farbeffekt versehenen Beschichtung.

11. Verfahren gemäß Anspruch 10 durch Beschichten mit einfachen, üblichen Beschichtungstechniken.

12. Verfahren gemäß Anspruch 10 oder 11, dadurch gekennzeichnet, daß man mit einer Beschichtungsmittel-Zubereitung gemäß Anspruch 7 beschichtet und die Oberfläche der getrockneten bzw. gehärteten Beschichtung selektiv und sequentiell mit zwei oder mehreren Lösungsmitteln behandelt, wobei die letzte Behandlung auch mit einer ein solches Lösungsmittel enthaltenden DeckbeschichtungsLösung durchgeführt werden kann.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 493 418 (AMANO)<br>* Ansprüche 1, 7 *<br>– – – | 1 | C 09<br>D 5/00<br>C 08 J 7/02<br>B 05 D 5/06 |
| A | FR-A-2 039 321 (IMPERIAL CHEMICAL INDUSTRIES)<br>* Seite 6, Zeilen 24 - 29 *<br>– – – – – | 1 | |

RECHERCHIERTE SACHGEBIETE (Int. Cl.5)

C 09 D
C 08
J
B 05 D
C 08 K
C 08 L

Der vorliegende Recherchenbericht wurde für alle Patentansprüche erstellt

| Recherchenort | Abschlußdatum der Recherche | Prüfer |
|---|---|---|
| Den Haag | 14 Januar 91 | SCHUELER D.H.H. |